# EUROPÄISCHE PATENTSCHRIFT

(11) **EP 1 264 725 B1**
(45) Veröffentlichungstag und Bekanntmachung des Hinweises auf die Patenterteilung: **13.04.2005**
(21) Anmeldenummer: 01114097.7
(22) Anmeldetag: 09.06.2001
(51) Int. Cl.: B60K 15/04

(54) **Verschluss für einen Tank eines Kraftfahrzeuges**
Filler cap for a motor-vehicle fuel tank
Bouchon de réservoir de carburant pour véhicules à moteur

(43) Veröffentlichungstag der Anmeldung: 11.12.2002
(73) Patentinhaber: TI Automotive (Fuldabrück) GmbH, 34277 Fuldabrück (DE)
(72) Erfinder: Zimmer, Werner, 34212 Melsungen (DE); Apel, Kurt, 36289 Neuenstein (DE)
(74) Vertreter: Rohmann, Michael, Dr.

(56) Entgegenhaltungen:
- EP-A- 0 997 337
- FR-A- 2 627 748
- US-A- 2 597 014

## Beschreibung

Die Erfindung betrifft einen Verschluss für einen flüssigen Kraftstoff aufnehmenden Tank eines Kraftfahrzeuges gemäß dem Oberbegriff der Anspruchs 1, wie aus der EP-A-997337 bekannt.

Solche Verschlüsse sind in der Praxis allgemein bekannt, und zwar in einer ersten Ausführungsform mit an der Innenmantelfläche des Einfüllstutzens vorgesehener Dichtfläche und in einer zweiten Ausführungsform mit an der freien Stirnfläche des Einfüllstutzens vorgesehener Dichtfläche. Beide Ausführungsformen haben sich auch bewährt. Die Dichtung soll hauptsächlich das Austreten von flüssigem Kraftstoff aus dem Tank verhindern. Gleichzeitig soll aber auch das Austreten von gasförmigen bzw. flüchtigen Kraftstoffkomponenten unterdrückt werden. Gerade letztgenannter Punkt hat in neuerer Zeit eine größere Bedeutung erlangt; tatsächlich führen nämlich die beim Tanken unvermeidlichen Manipulationen der Zapfpistole zu Beschädigungen der Dichtfläche des Einfüllstutzens. Eine sichere Unterdrückung von Gasemissionen aus dem Tankinneren ist so nicht mehr gewährleistet. Tatsächlich zeigen aktuelle Untersuchungen, dass der Verschluss eine Hauptschwachstelle bildet, da je nach Beschädigung der Dichtfläche dort bis zu 80 % der Gesamtemissionen des Kraftstoffsystems auftreten können.

Der Erfindung liegt die Aufgabe zugrunde, einen Verschluss für einen Tank eines Kraftfahrzeuges zu entwickeln, bei dem Beschädigungen der die Dichtung bewirkenden Teile durch eine Zapfpistole nicht mehr möglich sind.

Die erfindungsgemäße Lösung dieser Aufgabe besteht bei einem Verschluss der eingangs genannten Art darin, dass im Einfüllstutzen ein mit seinem vom freien Ende des Einfüllstutzens abgewandten Ende am Einfüllstutzen befestigter Schutzrohrabschnitt für die Dichtfläche des Einfüllstutzens vorgesehen ist und der Schutzrohrabschnitt zusammen mit dem Einfüllstutzen eine Aufnahmekammer für den Rohrstutzen des Drehverschlusselementes bildet.

Bei dem erfindungsgemäßen Verschluss sind also der Dichtungsring und die diesem zugeordnete Dichtfläche des Einfüllstutzens durch den Schutzrohrabschnitt einer Berührung durch eine Zapfpistole praktisch vollständig entzogen, so dass Beschädigungen nicht mehr möglich sind und die Dichtfunktion auch über längere Zeit sicher gewährleistet ist.

Nach bevorzugter Ausführungsform mit an der Innenmantelfläche des Einfüllstutzens vorgesehener Dichtfläche ist das freie Ende des Schutzrohrabschnittes etwa in der Ebene des freien Endes des Einfüllstutzens angeordnet. Mit anderen Worten endet der Schutzrohrabschnitt nicht vor dem Einfüllstutzen, so dass auch der Schutzrohrabschnitt zusammen mit dem Deckelorgan eine weitere Schikane für den flüssigen Kraftstoff bildet. Auf der anderen Seite empfiehlt es sich bei dieser Ausführungsform, das Deckelorgan mit einem Deckelkragen bis in die Nähe der Dichtungsringe herunterzuziehen, um letztere auch bei vom Einfüllstutzen entferntem Deckelorgan vor Beschädigung zu schützen.

In der Ausführungsform mit an der freien Stirnfläche des Einfüllstutzens vorgesehener Dichtfläche ist die Anordnung vorzugsweise so getroffen, dass das freie Ende des Schutzrohrabschnittes das freie Ende des Einfüllstutzens überragt. Zusätzlich empfiehlt es sich, den Einfüllstutzen mit Abstand von einem weiteren äußeren Schutzrohrabschnitt zu umgeben, dessen freies Ende etwa in der Ebene des freien Endes des inneren Schutzrohrabschnittes liegt und der zusammen mit dem Einfüllstutzen eine Aufnahmekammer für einen Außenkragen des Deckelorgans bildet.

In allen Fällen sollten die jeweils gebildeten Aufnahmekammern an ihrem unteren Ende einen Kraftstoffdurchlass aufweisen, um eventuell in die Aufnahmekammern hineingelangtem Kraftstoff eine Abflussmöglichkeit zu geben. Dies kann beispielsweise dadurch erreicht werden, dass der Schutzrohrabschnitt nur an beabstandeten Punkten mit dem Einfüllstutzen verbunden wird. Schließlich und endlich empfiehlt es sich, den Einfüllstutzen, die Schutzrohrabschnitte, den Rohrstutzen und/oder den Außenkragen an ihren freien Enden ballig auszubilden und/oder mit Einführungsabschrägungen zu versehen, um das Aufsetzen des Drehverschlusselementes auf den Einfüllstutzen zu erleichtern.

Im Folgenden wird die Erfindung anhand einer Zeichnung näher erläutert. Es zeigen
- Fig. 1: eine erste Ausführungsform eines Verschlusses im Längsschnitt und
- Fig. 2: eine zweite Ausführungsform eines Verschlusses im Längsschnitt.

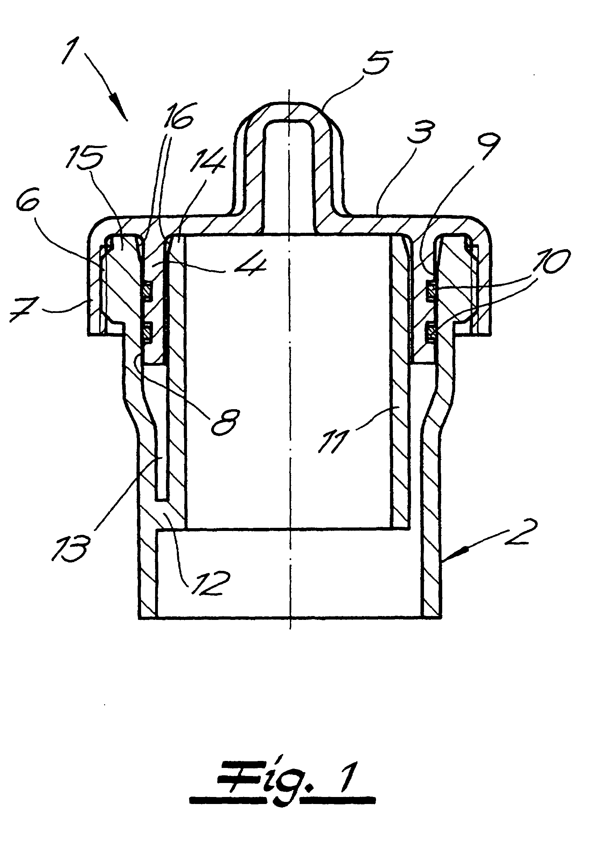

Der in Fig. 1 dargestellte Verschluss ist für einen mit flüssigem Kraftstoff zu befüllenden Tank eines Kraftfahrzeuges bestimmt. In seinem grundsätzlichen Aufbau besteht er aus einem Drehverschlusselement 1, das auf einem Einfüllstutzen 2 des Tanks lösbar befestigt ist. Dieses Drehverschlusselement 1 weist einen an ein Deckelorgan 3 anschließenden, in den Einfüllstutzen 2 hineinragenden Rohrstutzen 4 auf. Das Drehverschlusselement 1 bzw. Deckelorgan 3 weist an seiner Außenseite einen Manipulationsquersteg 5 auf. Der Drehverschluss 6 kann durch eine Schraubverbindung oder eine Bajonettverbindung zwischen dem freien Ende 15 des Einfüllstutzens 2 und dem dieses überragenden Deckelkragen 7 des Deckelorgans 3 verwirklicht sein. An der Außenmantelfläche 8 des Rohrstutzens 4 sind zwei an der Innenmantelfläche 9 des Einfüllstutzens 2 anliegende Dichtungsringe 10 in Form eines O-Elastomerringes mit Abstand voneinander angeordnet. Es besteht ohne weiteres die Möglichkeit, auf einen der beiden Dichtungsringe 10 zu verzichten. Die Innenmantelfläche 9 des Einfüllstutzens 2 und die zugeordnete Außenmantelfläche 8 des Rohrstutzens 4 können auch konisch oder stufig ausgebildet sein, um die Dichtfunktion nur am Ende des Verschließens zu gewährleisten und so den Dichtungsringen 10 eine längere Lebensdauer zu geben.

Die Besonderheit des beschriebenen Verschlusses besteht nun darin, dass im Einfüllstutzen 2 ein Schutzrohrabschnitt 11 vorgesehen ist. Dieser Schutzrohrabschnitt 11 ist mit seinem vom freien Ende des Einfüllstutzens 2 abgewandten Ende 12 am Einfüllstutzen 2 befestigt, z. B. angeschweißt. Zusammen mit dem Einfüllstutzen 2 bildet dieser Schutzrohrabschnitt 11 eine Aufnahmekammer 13 für den Rohrstutzen 4 des Drehverschlusselementes 1, so dass die von Dichtungsring(en) 10 und Innenmantelfläche 9 des Einfüllstutzens 2 gebildete Dichtung dem mechanischen Angriff von Zapfpistolen vollkommen entzogen ist.

Das freie Ende 14 des Schutzrohrabschnittes 11 liegt in der Ebene des freien Endes 15 des Einfüllstutzens 2, d. h. reicht genauso weit wie das freie Ende 15 des Einfüllstutzens 2. Im Übrigen erkennt man in der Figur 1, dass der Einfüllstutzen 2 und der Schutzrohrabschnitt 11 an ihren einander zugewandten Mantelflächenenden mit einer Einführungsabschrägung 16 versehen sind.

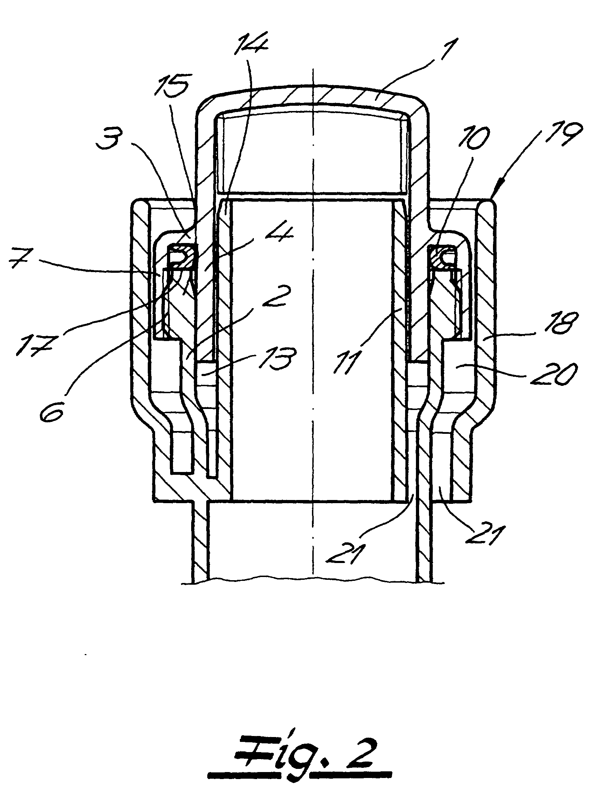

Die Ausführungsform nach Fig. 2 unterscheidet sich von der nach Fig. 1 dadurch, dass die dem Dichtungsring 10 zugeordnete Dichtfläche an der freien Stirnfläche 17 des Einfüllstutzens 2 vorgesehen ist. Das freie Ende 14 des Schutzrohrabschnittes 11 überragt hierbei das freie Ende 15 des Einfüllstutzens 2. Im Übrigen erkennt man, dass der Einfüllstutzen 2 mit Abstand von einem weiteren äußeren Schutzrohrabschnitt 18 umgeben ist, dessen freies Ende 19 in der Ebene des freien Endes des inneren Schutzrohrabschnittes 11 liegt und der zusammen mit dem Einfüllstutzen 2 eine Aufnahmekammer 20 für den Deckel 7 des Deckelorgans 3 bildet. Beide Aufnahmekammern 13, 20 weisen an ihrem unteren Ende einen Kraftstoffdurchlass 21 auf.

## Patentansprüche

1. Verschluss für einen Tank eines Kraftfahrzeuges, bestehend aus einem Einfüllstutzen und einem auf diesen Einfüllstutzen (2) des Tanks lösbar befestigten Drehverschlusselement (1) mit einem an ein Deckelorgan (3) anschließenden, in den Einfüllstutzen (2) hineinragenden Rohrstutzen (4), wobei im Bereich von dessen Außenmantelfläche (8) zumindest ein an einer Dichtfläche des Einfüllstutzens (2) anliegender Dichtungsring (10) angeordnet ist, **dadurch gekennzeichnet, dass** im Einfüllstutzen (2) ein mit seinem vom freien Ende (15) des Einfüllstutzens (2) abgewandten Ende (12) am Einfüllstutzen (2) befestigter Schutzrohrabschnitt (11) für die Dichtfläche des Einfüllstutzens (2) vorgesehen ist und der Schutzrohrabschnitt (11) zusammen mit dem Einfüllstutzen (2) eine Aufnahmekammer (13) für den Rohrstutzen (4) des Drehverschlusselementes (1) bildet.

2. Verschluss nach Anspruch 1 in der Ausführungsform mit an der Innenmantelfläche (9) des Einfüllstutzens (2) vorgesehener Dichtfläche, **dadurch gekennzeichnet, dass** das freie Ende (14) des Schutzrohrabschnittes (11) etwa in der Ebene des freien Endes (15) des Einfüllstutzens (2) liegt.

3. Verschluss nach Anspruch 2, **dadurch gekennzeichnet, dass** das Deckelorgan (3) mit einem Deckelkragen (7) bis in die Nähe der Dichtungsringe (10) heruntergezogen ist.

4. Verschluss nach Anspruch 1 in der Ausführungsform mit an der freien Stirnfläche (17) des Einfüllstutzens (2) vorgesehener Dichtfläche, **dadurch gekennzeichnet, dass** das freie Ende (14) des Schutzrohrabschnittes (11) das freie Ende (15) des Einfüllstutzens (2) überragt.

5. Verschluss nach Anspruch 4, **dadurch gekennzeichnet, dass** der Einfüllstutzen (2) mit Abstand von einem weiteren äußeren Schutzrohrabschnitt (18) umgeben ist, dessen freies Ende (19) etwa in der Ebene des freien Endes des inneren Schutzrohrabschnittes (11) liegt und der zusammen mit dem Einfüllstutzen (2) eine Aufnahmekammer (20) für einen Deckelkragen (7) des Deckelorgans (3) bildet.

6. Verschluss nach einem der Ansprüche 1 bis 5, **dadurch gekennzeichnet, dass** die Aufnahmekammer (13 bzw. 20) an ihrem unteren Ende einen Kraftstoffdurchlass (21) aufweist.

7. Verschluss nach einem der Ansprüche 1 bis 6, **dadurch gekennzeichnet, dass** der Einfüllstutzen (2), die Schutzrohrabschnitte (11, 18), der Rohrstutzen (4) und/oder der Deckelkragen (7) an ihren freien Enden ballig ausgebildet und/oder mit Einführungsabschrägungen (16) versehen sind.

## Claims

1. A closure for the tank of an automotive vehicle, consisting of a filler neck and of a rotatable closure element (1) releasably fastened to said filler neck (2) of said tank, with a pipe socket (4) that is adjoined with a lid member (3) and protrudes into the fill neck (2), at least one gasket (10) fitting against a sealing surface of the filler neck (2) being disposed in the region of the outer surface area (8) of said pipe socket, **characterized in that** a protector pipe segment (11) for protecting the sealing surface of the filler neck (2) is provided in the filler neck (2), said protector pipe segment (11) being attached to the filler neck (2) at its end (12) turned away from the free end (15) of the filler neck (2) and forming, together with the filler neck (2), a receiving chamber (13) for receiving the pipe socket (4) of the rotatable closure element (1).

2. The closure as set forth in claim 1 in the embodiment having a sealing surface provided on the inner surface area (9) of the filler neck (2), **characterized in that** the free end (14) of the protector pipe segment (11) approximately lies in the plane of the free end (15) of the filler neck (2).

3. The closure as set forth in claim 2, **characterized in that** the lid member (3) has a lid collar (7) that extends downward and ends in proximity to the gaskets (10).

4. The closure as set forth in claim 1 in the embodiment having a sealing surface provided on the free end face (17) of the filler neck (2), **characterized in that** the free end (14) of the protector pipe segment (11) extends beyond the free end (15) of the filler neck (2).

5. The closure as set forth in claim 4, **characterized in that** an additional outer protector pipe segment (18), the free end (19) of which lies approximately in the plane of the free end of the inner protector pipe segment (11), surrounds and is spaced apart from the filler neck (2), said additional outer protector pipe segment forming, together with said filler neck (2), a receiving chamber (20) for receiving a lid collar (7) of the lid member (3).

6. The closure as set forth in any of the claims 1 through 5, **characterized in that** each receiving chamber (13 and 20, respectively) comprises a fuel passageway (21) at its lower end.

7. The closure as set forth in any of the claims 1 through 6, **characterized in that** the filler neck (2), the protector pipe segments (11, 18), the pipe socket (4) and/or the lid collar (7) are configured to be spherical at their free ends and/or are provided with insertion bevels (16).

## Revendications

1. Fermeture pour un réservoir de véhicule automobile, constitué d'une tubulure de remplissage et d'un élément de fermeture tournant (1) amoviblement fixé sur cette tubulure de remplissage (2) du réservoir avec un raccord de tubulure (4) s'étendant dans le prolongement d'un organe formant couvercle (3) et faisant saillie dans la tubulure de remplissage (2), au moins une bague d'étanchéité (10) en appui contre une surface d'étanchéité de la tubulure de remplissage (2) étant disposée dans la région de la surface extérieure (8) du raccord de tubulure, **caractérisée en ce qu'**il est prévu dans la tubulure de remplissage (2) un tronçon de tube protecteur (11) de la surface d'étanchéité de la tubulure de remplissage (2) fixé sur la tubulure de remplissage (2) par son extrémité (12) détournée de l'extrémité libre (15) de la tubulure de remplissage (2) et que le tronçon de tube protecteur (11) forme, avec la tubulure de remplissage (2), une chambre (13) de réception du raccord de tubulure (4) de l'élément de fermeture tournant (1).

2. Fermeture selon la revendication 1 dans le mode de réalisation comportant une surface d'étanchéité prévue sur la surface intérieure (9) de la tubulure de remplissage (2), **caractérisée en ce que** l'extrémité libre (14) du tronçon de tube protecteur (11) se situe environ dans le plan de l'extrémité libre (15) de la tubulure de remplissage (2).

3. Fermeture selon la revendication 2, **caractérisée en ce que** l'organe formant couvercle (3) comporte une partie périphérique saillante (7) qui s'étend vers le bas jusqu'à proximité des bagues d'étanchéité (10).

4. Fermeture selon la revendication 1 dans le mode de réalisation comportant une surface d'étanchéité prévue sur la face d'extrémité libre (17) de la tubulure de remplissage (2), **caractérisée en ce que** l'extrémité libre (14) du tronçon de tube protecteur (11) s'étend au-delà de l'extrémité libre (15) de la tubulure de remplissage (2).

5. Fermeture selon la revendication 4, **caractérisée en ce que** la tubulure de remplissage (2) est entourée à distance d'un autre tronçon de tube protecteur extérieur (18) dont l'extrémité libre (19) se situe environ dans le plan de l'extrémité libre du tronçon de tube protecteur intérieur (11) et qui forme, avec la tubulure de remplissage (2), une chambre (20) de réception d'une partie périphérique saillante (7) de l'organe formant couvercle (3).

6. Fermeture selon l'une quelconque des revendications 1 à 5, **caractérisée en ce que** la chambre de réception (respectivement 13 et 20) comporte à son extrémité inférieure un passage (21) pour le carburant.

7. Fermeture selon l'une quelconque des revendications 1 à 6, **caractérisée en ce que** la tubulure de remplissage (2), les tronçons de tube protecteur (11, 18), le raccord de tubulure (4) et/ou la partie périphérique saillante (7) du couvercle sont bombés à leur extrémité et/ou sont munis de biseaux d'insertion (16).
